(19) Europäisches Patentamt / European Patent Office / Office européen des brevets

(11) **EP 3 142 059 A1**

(12) **EUROPEAN PATENT APPLICATION**

(43) Date of publication:
15.03.2017 Bulletin 2017/11

(51) Int Cl.:
*G06Q 30/00* [(2012.01)]     *G06Q 30/06* [(2012.01)]

(21) Application number: 15306406.8

(22) Date of filing: 14.09.2015

| | |
|---|---|
| (84) Designated Contracting States:<br>AL AT BE BG CH CY CZ DE DK EE ES FI FR GB<br>GR HR HU IE IS IT LI LT LU LV MC MK MT NL NO<br>PL PT RO RS SE SI SK SM TR<br>Designated Extension States:<br>**BA ME**<br>Designated Validation States:<br>**MA**<br><br>(71) Applicant: **Thomson Licensing**<br>**92130 Issy-les-Moulineaux (FR)** | (72) Inventors:<br>• **LE MERRER, Erwan**<br>  **35576 Cesson Sévigné (FR)**<br>• **PATRA, Rhicheek**<br>  **712201 Hooghly - West Bengal (IN)**<br>• **VIGOUROUX, Jean-Ronan**<br>  **35576 Cesson Sévigné (FR)**<br><br>(74) Representative: **Browaeys, Jean-Philippe**<br>**TECHNICOLOR**<br>**1-5, rue Jeanne d'Arc**<br>**92130 Issy-les-Moulineaux (FR)** |

(54) **DEVICE AND METHOD FOR FINDING TOP-K NEIGHBOURS IN A RECOMMENDATION SYSTEM**

(57) A device (100) for finding top-$k$ neighbours in a recommendation system comprises memory (120) configured to store, for a plurality of users, a number of tuples comprising data regarding consumption of items, the data comprising, for each item, an identifier of the item and a time of consumption of the item by the user, and a processor (110) configured to calculate (S21) measures of similarity between a first user and a number of second users among the plurality of users, the processor configured to calculate the measures of similarity using the identifiers of the items and the time of consumption of the items, and obtain (S23) the top-$k$ neighbours by taking k second users with highest measures of similarity to the first user. Different ways of calculating the measure of similarity are presented.

S20 — Obtain new consumption tuple for user u

S21 — Calculates similarity between the users in the system with regard to user u.

S22 — Sort the similarities

S23 — Obtain the top-$k$ neighbours from the $k$ highest similarities

S24 — Obtain recommendations from consumption of the top-$k$ neighbours

S25 — Prepare for consumption of recommendations by user u

Figure 2

## Description

<u>TECHNICAL FIELD</u>

The present disclosure relates generally to recommendation systems and in particular to finding the top-$k$ neighbours for a given user.

<u>BACKGROUND</u>

Providing recommendations for items such as films or books is beneficial to both the end users and providers. The first are likely to find items they might have missed otherwise, while the latter are likely to increase their revenues. For these reasons, recommendation systems are widespread.

Conventional approaches to recommendation require users to rate items that they have consumed, whether this is an ongoing process or performed during initialization to build a user profile. An example of such a recommendation algorithm is preceded by the calculation of the top-$k$ nearest neighbours using cosine similarity, as described by Adomavicius et al. in "Toward the Next Generation of Recommender Systems: A Survey of the State-of-the-Art and Possible Extensions".

This is clearly a burden to the user, and can be error-prone since the users' ratings may depend on their mood at the time when the possibility of rating movies is given by the provider. The need for ratings also forces the provider to set up a collect infrastructure. It is therefore desirable to develop recommendation systems that do not need input rating from the users.

<u>SUMMARY OF DISCLOSURE</u>

In a first aspect, the present principles are directed to a device for determining top-$k$ neighbours in a recommendation system. The device comprises memory configured to store, for a plurality of users, a number of tuples comprising data regarding consumption of items, the data comprising, for each item, an identifier of the item and a time of consumption of the item by the user, and a processor configured to calculate measures of similarity between a first user and a number of second users among the plurality of users, the processor configured to calculate the measures of similarity using the identifiers of the items and the time of consumption of the items, and determine as the top-$k$ neighbours k second users with highest measures of similarity to the first user.

Various embodiments of the first aspect include:

- That the processor is further configured to sort the measures of similarity.
- That the processor is configured to calculate a measure of similarity by calculating a distance between different pairs of items for the first user and for a second user, the distance being expressed as a path length or a time difference, and determining the measure of similarity by counting the number of pairs of items for which the distance for the first user and the distance for the second user are below a threshold value.
- That the processor is configured to calculate the similarity measure by subtracting a number of divergent pairs from a number of convergent pairs to obtain a result that is divided by a number based on the square of the total number of pairs, wherein a convergent pair is a pair for which an absolute distance between the two items of the pair is below a threshold value for both the first user and the second user, and a divergent pair is a pair for which an absolute distance between the two items of the pair is above a threshold value for at least one of the first user and the second user.
- That the processor is configured to obtain recommended items for the first user from the consumption of the top-k neighbours and to make the recommended items known to the first user. The processor can be configured to prepare a distribution system for the consumption of the recommended items.

In a second aspect, the disclosure is directed to a method for determining top-k neighbours in a recommendation system. A processor calculates measures of similarity between a first user and a number of second users among the plurality of users, the processor configured to calculate the measures of similarity using identifiers of items and time of consumption of the items, and determines as the top-$k$ neighbours k second users with highest measures of similarity to the first user.

Various embodiments of the second aspect include:

- Sorting the measures of similarity.
- That calculating a measure of similarity comprises calculating a distance between different pairs of items for the first user and for a second user, the distance being expressed as a path length or a time difference, and determining the measure of similarity by counting the number of pairs of items for which the distance for the first user and the distance for the second user are below a threshold value.

- That calculating a measure of similarity comprises subtracting a number of divergent pairs from a number of convergent pairs to obtain a result that is divided by a number based on the square of the total number of pairs, wherein a convergent pair is a pair for which an absolute distance between the two items of the pair is below a threshold value for both the first user and the second user, and a divergent pair is a pair for which an absolute distance between the two items of the pair is above a threshold value for at least one of the first user and the second user.

- That the processor obtains recommended items for the first user from the consumption of the top-k neighbours and makes the recommended items known to the first user. The processor can prepare a distribution system for the consumption of the recommended items.

In a third aspect, the disclosure is directed to a computer program comprising program code instructions executable by a processor for implementing the steps of a method according to at least one embodiment of the present principles.

In a fourth aspect, the disclosure is directed to a computer program product which is stored on a non-transitory computer readable medium and comprises program code instructions executable by a processor for implementing the steps of a method according to at least one embodiment of the second aspect.

BRIEF DESCRIPTION OF DRAWINGS

Preferred features of the present principles will now be described, by way of non-limiting example, with reference to the accompanying drawings, in which

    Figure 1 illustrates a device implementing the present principles;
    Figure 2 illustrates a method for finding the top-*k* neighbours according to the present principles; and
    Figure 3 illustrates an evaluation result using the method according to the first embodiment of the present principles.

DESCRIPTION OF EMBODIMENTS

The present disclosure presents iKNN, which can be used to compute a user's top-*k* nearest neighbours in the recommendation system. Nearest neighbours identification is used as a building block to implement various recommendation services, be it for Video on Demand (VoD) or e-commerce. iKNN relies on information that a service provider already possesses: purchase transactions, as opposed to conventional approaches that rely on explicitly asking ratings to users which might annoy them and dissuade them from using the system.

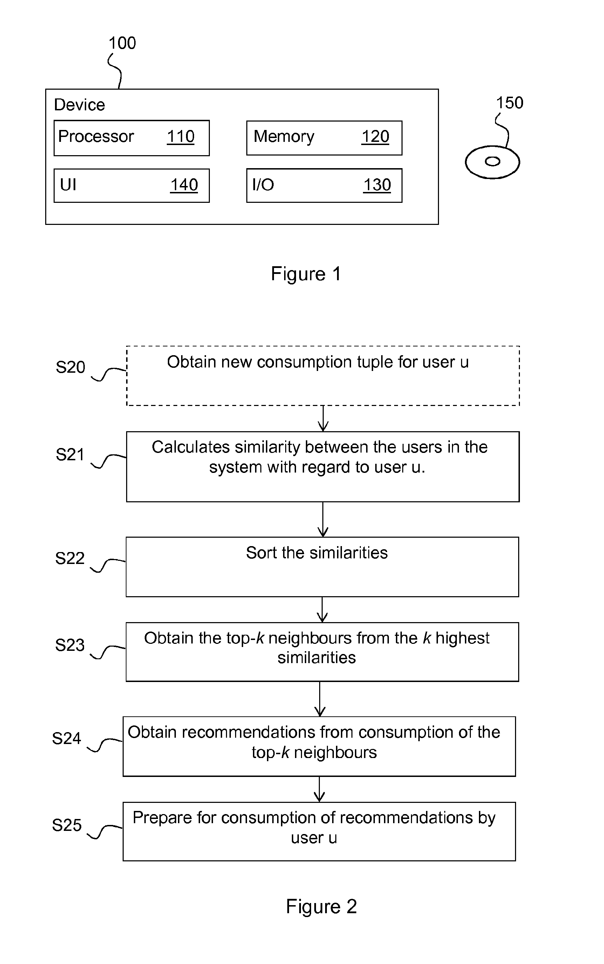

Figure 1 illustrates a device 100 implementing the present principles. The device 100 includes at least one hardware processing unit ("processor") 110, external or internal (or a combination of the two) memory 120, at least one communications interface 130 configured to communicate with other devices and a user interface ("UI") 140. The UI can be implemented as a single unit for input and output - e.g. a touchscreen - or as separate units such as a screen and a keyboard. The skilled person will appreciate that the illustrated devices are very simplified for reasons of clarity, thus not showing features such as internal connections and power supplies. A non-transitory storage medium 150 stores instructions that, when executed by a processor, perform the method for computing top-*k* nearest neighbours illustrated in Figure 2.

The memory 120 stores a number of user profiles, for example, one user profile per user. The user profile comprises a number of tuples of an identifier of items consumed by the user and the time of consumption. A user profile $P_{u_1}$ for a user $u_1$ having consumed n items can be illustrated as follows:

$$P_{u_1} = \left\{ \langle i_1, t_{u_1, t_1} \rangle, \dots, \langle i_n, t_{u_n, t_n} \rangle \right\}$$

where $i_1$ is the identifier of item 1 and $t_{u_1, t_1}$ is the time that user $u_1$ consumed the item. The tuples are preferably sorted by the consumption time so that the tuples are in the order of consumption.

The processor 110 is configured to find the top-*k* nearest neighbours for any user having a user profile with at least two tuples in the user profile. This can be accomplished using time similarity based on for example a so-called Hammock distance or Kendall's rank correlation.

In a first embodiment, a so-called Hammock distance (H) denotes a distance between a pair of items in a given user profile. $H_{u_1}(i_l, i_m)$ denotes the Hammock distance between the items $i_l$ and $i_m$ in $P_{u_1}$. $H_{u_1}(i_l, i_m)$ is calculated as the path length between $i_l$ and $i_m$ in $P_{u_1}$. Alternatively, $H_{u_1}(i_l, i_m)$ can be computed as the time difference between $i_l$ and $i_m$

with a suitable time unit, which can be expressed as in steps of evolution (i.e., updates) of the system or in units of time.

So-called Hammock pairs, calculated using Hammock distances for pairs of users are used to compare and select the top-*k* neighbours, can be expressed as:

$$\mathcal{HP}_{u_1,u_2} = \left\{ \langle i_l, i_m \rangle \,\middle|\, \mathcal{H}_{u_1}(i_l, i_m) < \delta_H \,\&\, \mathcal{H}_{u_2}(i_l, i_m) < \delta_H \right\}$$

*where* $\delta_H$ denotes the Hammock threshold. In other words, users $u_1$ and $u_2$ are a Hammock pair for items $i_l$ and $i_m$ if their Hammock distances between items $i_l$ and $i_m$ are below the Hammock threshold $\delta_H$.

An alternate embodiment uses a modified version of Kendall's tau correlation to measure the similarity between the users.

Let $u_1$ and $u_2$ be two users. Let $j_1, ..., j_k$ denote the indices of the items that both of these user have purchased and let $t_{j1}, ..., t_{jk}$ denote the times of purchases for user $u_1$ and let $t'_{j1}, ..., t'_{jk}$ be the times of purchases for user $u_2$.

The modified Kendall's tau distance is defined as follows:

$$\tau_{\delta_H} = \frac{\#ConPairs - \#DivPairs}{\frac{k}{2}(k-1)}$$

where *#ConPairs* is the number of concordant pairs between the two users and *#DivPairs* is the number of divergent pairs between the users. A pair $j_p j_q$ is said to be concordant if $t_{ip} - \delta_H < t_{jq}$ and $t'_{jp} < t'_{Jq} + \delta_H$. That is to say that the two events occur in the same order or in the opposite order with a maximum lag of $\delta_H$. Conversely, a divergent pair is a pair which is not concordant. It is to be noticed that this corresponds to the classical Kendall's tau correlation with the addition of possible inversion in order in a restricted time lag.

As in the first embodiment, the time difference can be given as update steps or in units of time.

The calculated time similarities can then be used to obtain the top-*k* neighbours for the user $u_1$. As shown in Algorithms 1 and 2 hereinafter, iKNN is two-fold. First, the similarity between user $u_1$ and all the other users in the system U is computed, preferably using one of the two embodiments described herein. Then the top-*k* neighbours for the user $u_1$ are calculated as the top-*k* users with highest similarity score.

---

Algorithm 1 iKNN - first embodiment: γ($P_u$), where $P_u$ is the profile of user *u.*

1: var *Score*[];
2: **for all** *uid :* user in *U* **do**
3: *Score*[*uid*] = $\mathcal{H}$ $P_{u,uid}$.size;
4: **end for**
5: $N_u$ = *subList*(*k*; *sort*(*Score*));
6: **return:** $N_u$, the *k* users with the highest similarity

---

.size returns the number of Hammock pairs.

---

Algorithm 2 iKNN - second embodiment: γ($P_u$), where $P_u$ is the profile of user *u.*
1: var *Score*[ ];
2: **for all** *uid :* user in *U* **do**
3: *Score*[*uid*] = $\tau_{\delta_H}$ (*u, uid*);
4: **end for**
5: $N_u$ = *subList*(*k*; *sort*(*Score*));
6: **return:** $N_u$, the *k* users with the highest similarity

---

Figure 2 illustrates a method according to Algorithms 1 and 2. In step S21, the processor 110 calculates the scores, i.e. the similarity, for the users in the system with regard to a specific user u. In step S22, the processor 110 sorts the scores and obtains, in step S23, the top-*k* neighbours.

The method may be performed at any time, but in one embodiment it is performed when a user has consumed a new item since it may then update the recommendations for the user. In this case, the method further comprises receiving, in preceding step S20, the new tuple for the user.

In step S24, the processor 110 obtains recommendations from the consumption of the top-k neighbours. This can for example be done by finding items that the top-*k* neighbours have recently consumed or by finding the items that the top-*k* neighbours have consumed just after the item in the new tuple for user u. The obtained recommendations are preferably made known to user u, for example by sending the recommendations to the device of user u.

In step S25, the processor 110 prepares a distribution system for the consumption of the recommended items. In a video on demand system (in which the items are films), this may be done by caching the films so that they can be retrieved in an easy manner, by encrypting the films for the user before the films are ordered or by pushing at least part of the films to a storage device closer to the user's device.

In a first variant, the principles take into account the time elapsed between two items that were consumed. Users that have a "close" consumption of similar items are then favored for the top-*k* selection. In this variant, the distance between items is an absolute value, meaning that the order of consumed items for two close users can be reversed.

In a second variant, the top-*k* determination takes into account the strict order in the consumption of items, for instance to determine the number of Hammock pairs.

Evaluation

As will be described hereinafter, iKNN can perform better than the conventional approach to compute top-*k* nearest neighbours using cosine similarity which leverages rating feedback from users.

The first embodiment, i.e. using Hammock pairs, was used for the evaluation. Real traces from Movielens [http://grouplens.org/datasets/movielens/] and Amazon [McAuley and Leskovec: "Hidden Factors and Hidden Topics: Understanding Rating Dimensions with Review Text", RecSys 2013] were used.

The Movielens dataset consisted 100,000 ratings from 943 users for 1,682 items where each user rated at least 20 movies. The data represents user preferences collected during a 7-month period and is often used to evaluate recommenders.

The Amazon dataset consisted of 335,790 ratings from 5,899 users for 65,167 items where each user rated at least 20 movies. The data represents user preferences for a duration of two years starting from 2011 till 2013.

To enable comparisons, the time of each rating was used as time of consumption of this item (since the datasets do not contain the consumption time information). The datasets are summarised in Table 1:

Table 1

| Dataset | Users | Items | Ratings | Density(%) |
|---------|-------|-------|---------|------------|
| **Movielens** | 943 | 1682 | 100000 | 6.31 |
| **Amazon** | 5899 | 65167 | 335790 | 0.087 |

In order to evaluate the quality of the *k* nearest neighbors in iKNN, the *recall* metric was relied on [see Mohammad Alaggan, Sébastien Gambs and Anne-Marie Kermarrec. "Heterogeneous Differential Privacy." arXiv preprint arXiv:1504.06998 (2015)]. The datasets were divided into a training set (90%) and a test set (10%). In the test set, the profiles of the users are denoted as the test profiles. The recall is defined as the ratio of the items found in the profiles of the *k* neighbors over all the possible items contained in the test profile of a given user. The average recall for all the test profiles is then reported as the outcome of the experiment.

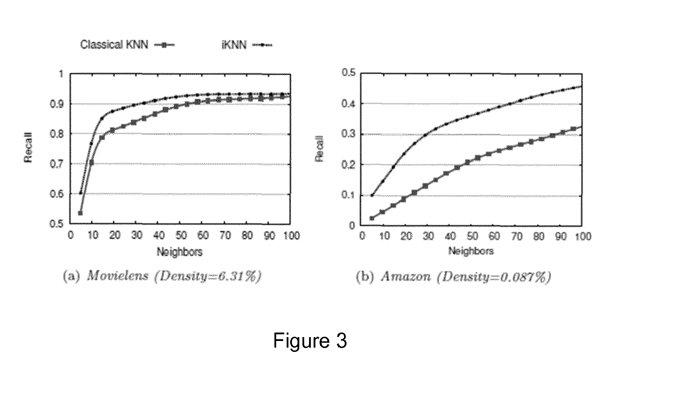

Figure 3 shows the quality evaluation of iKNN compared with the classical user-based described by Adomavicius and that computes cosine similarity between users leveraging the ratings. The Figure demonstrates that iKNN outperforms the classical approach by a significant margin. It is also observed that the margin of improvement increases as the dataset becomes less dense which is a practical requirement in e-commerce as users tend to rate very few items. For the experiments, the Hammock threshold ($\delta$) was set to 10 for both datasets.

It will be appreciated that the present principles can provide a solution that removes the need for ratings in the recommendation system, which can be of importance as it can allow a widespread use of recommendation without the burden of having an infrastructure dedicated to rating and without running the risk of annoying customers when collecting such ratings. The present solution can also outperform classical approaches.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A device (100) for determining top-*k* neighbours in a recommendation system, the device (100) comprising:

   - memory (120) configured to store, for a plurality of users, a number of tuples comprising data regarding consumption of items, the data comprising, for each item, an identifier of the item and a time of consumption of the item by the user;
   - a processor (110) configured to:

      calculate, using the identifiers of the items and the time of consumption of the items, measures of similarity between a first user and a number of second users among the plurality of users; and
      determining as the top-*k* neighbours k second users with highest measures of similarity to the first user.

2. The device of claim 1, wherein the processor is further configured to sort the measures of similarity.

3. The device of claim 1, wherein the processor is configured to calculate a measure of similarity by:

   calculating a distance between different pairs of items for the first user and for a second user, the distance being expressed as a path length or a time difference;
   determining the measure of similarity by counting the number of pairs of items for which the distance for the first user and the distance for the second user are below a threshold value.

4. The device of claim 1, wherein the processor is configured to calculate the similarity measure by:

   subtracting a number of divergent pairs from a number of convergent pairs to obtain a result that is divided by a number based on the square of the total number of pairs, wherein a convergent pair is a pair for which an absolute distance between the two items of the pair is below a threshold value for both the first user and the second user, and a divergent pair is a pair for which an absolute distance between the two items of the pair is above a threshold value for at least one of the first user and the second user.

5. The device of claim 1, wherein the processor is configured to obtain recommended items for the first user from the consumption of the top-k neighbours and to make the recommended items known to the first user.

6. The device of claim 5, wherein the processor is configured to prepare a distribution system for the consumption of the recommended items.

7. A method for determining top-*k* neighbours in a recommendation system, the method comprising:

   calculating (S21), using identifiers of items and time of consumption of the items, by a processor measures of similarity between a first user and a number of second users among the plurality of users; and
   determine (S23) as the top-*k* neighbours k second users with highest measures of similarity to the first user.

8. The method of claim 7, further comprising sorting (S22) the measures of similarity.

9. The method of claim 7, wherein calculating a measure of similarity comprises:

   calculating a distance between different pairs of items for the first user and for a second user, the distance being expressed as a path length or a time difference;
   determining the measure of similarity by counting the number of pairs of items for which the distance for the first user and the distance for the second user are below a threshold value.

10. The method of claim 7, wherein calculating a measure of similarity comprises:

   subtracting a number of divergent pairs from a number of convergent pairs to obtain a result that is divided by a number based on the square of the total number of pairs, wherein a convergent pair is a pair for which an absolute distance between the two items of the pair is below a threshold value for both the first user and the second user, and a divergent pair is a pair for which an absolute distance between the two items of the pair is above a threshold value for at least one of the first user and the second user.

11. The method of claim 7, wherein the processor is configured to obtain (S24) recommended items for the first user from the consumption of the top-k neighbours and to make the recommended items known to the first user.

12. The method of claim 11, wherein the processor is configured to prepare (S25) a distribution system for the consumption of the recommended items.

13. Computer program comprising program code instructions executable by a processor for implementing the steps of a method according to at least one of claims 7 to 12.

14. Computer program product (150) which is stored on a non-transitory computer readable medium and comprises program code instructions executable by a processor for implementing the steps of a method according to at least one of claims 7 to 12.

100

Device

| Processor | 110 | | Memory | 120 |
| UI | 140 | | I/O | 130 |

150

Figure 1

S20 — Obtain new consumption tuple for user u

S21 — Calculates similarity between the users in the system with regard to user u.

S22 — Sort the similarities

S23 — Obtain the top-$k$ neighbours from the $k$ highest similarities

S24 — Obtain recommendations from consumption of the top-$k$ neighbours

S25 — Prepare for consumption of recommendations by user u

Figure 2

(a) *Movielens (Density=6.31%)*   (b) *Amazon (Density=0.087%)*

Figure 3

Europäisches
Patentamt

European
Patent Office

Office européen
des brevets

## EUROPEAN SEARCH REPORT

Application Number

EP 15 30 6406

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/153663 A1 (KOREN YEHUDA [US] ET AL) 23 June 2011 (2011-06-23) * paragraphs [0001], [0015], [0017], [0023], [0038], [0042] - [0043], [0045], [0062] * ----- | 1-14 | INV. G06Q30/00 G06Q30/06 |

TECHNICAL FIELDS
SEARCHED      (IPC)

G06Q

The present search report has been drawn up for all claims

| Place of search | Date of completion of the search | Examiner |
|---|---|---|
| Munich | 22 February 2016 | Bîrlescu, V |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 6406

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2016

| Patent document cited in search report | Publication date | Patent family member(s) | Publication date |
|---|---|---|---|
| US 2011153663 A1 | 23-06-2011 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ADOMAVICIUS et al.** *Toward the Next Generation of Recommender Systems: A Survey of the State-of-the-Art and Possible Extensions*
- **MCAULEY ; LESKOVEC.** Hidden Factors and Hidden Topics: Understanding Rating Dimensions with Review Text. *RecSys,* 2013
- **MOHAMMAD ALAGGAN ; SÉBASTIEN GAMBS ; ANNE-MARIE KERMARREC.** *Heterogeneous Differential Privacy,* 2015, 1504.06998